# EUROPEAN PATENT APPLICATION

(11) **EP 4 786 961 A1**
(43) Date of publication of application: **05.08.2026**
(21) Application number: 25382076.5
(22) Date of filing: 04.02.2025
(51) Int. Cl.: G01N 21/89

(54) **BURR DETECTION SYSTEM**

(71) Applicant: Solid Machine Vision S.L., 01510 Vitoria-Gasteiz (ES)
(72) Inventor: GARCIA DE CORTAZAR PEREZ DE ALBENIZ, Jose Ignacio, 01510 VITORIA-GASTEIZ (ES); TRESCASTRO ARANA, Iñigo, 01510 VITORIA-GASTEIZ (ES); FROJAN GARCIA, Aritz, 20570 BERGARA (ES)
(74) Representative: Galbaian S.Coop.

(57) **Abstract**

The invention relates to a system (100) and to a detection method configured to detect burrs on a longitudinal edge (3.0, 3.1) of a metal strip (3) used for the manufacture of battery electrodes, by means of an assembly (101) comprising a first detector (1) for obtaining a first image of the edge (3.0) of the strip (3), and a second detector (2) which is arranged downstream of the first detector (1) and comprises an optical assembly (2.9) facing the edge (3.0) of the strip (3) and having an optical camera (2.0) configured to obtain a second image of the edge (3.0). The optical assembly (2.9) is movable in an adjustment direction (B) to adjust its distance from the edge (3.0, 3.1), and the system (100) comprises a control unit (4) for determining whether or not there is a burr on the edge (3.0, 3.1) based on the second image.

## Description

### TECHNICAL FIELD

The present invention relates to a system for detecting burrs on metal strips used for battery electrodes.

### PRIOR ART

With the continuous development of the new energy industry, the use of batteries has expanded exponentially in recent years.

Batteries comprise metal electrodes which are generated from a metal sheet or foil of a given width. This foil is usually cut lengthwise to produce parallel metal strips of smaller width, each strip comprising the width required for the electrodes. As many longitudinal cuts are made as many strips are desired or can be generated.

Said longitudinal cuts can leave burrs on the edges which can then negatively affect the battery, for example by causing short circuits. Therefore, the detection of burrs on metal strips plays an important role in ensuring the safety of manufactured batteries comprising electrodes made from these metal strips.

A burr detection system is disclosed in CN115931869A. The system uses a liquid telecentric lens facing an edge of the metal strip and configured to obtain an image of this edge. This image is sent to a control unit so that the control unit can determine whether or not a burr is present based on this image. The system further comprises an optical camera upstream of the liquid telecentric lens in the forward direction of the metal strip to detect the position of the edge of the metal strip. This camera communicates with the control unit to determine this position, and based on the position the focus of the liquid telecentric lens is adjusted as required for the liquid telecentric lens to obtain sharp images of the edge of the strip.

### DISCLOSURE OF THE INVENTION

The object of the invention is to provide burr detection system as defined in the claims.

The burr detection system is configured to detect burrs on at least one longitudinal edge of at least one metal strip that is subsequently used to manufacture battery electrodes. The burr detection system comprises a detection assembly for performing such detection, and said detection assembly comprises a first detector for obtaining a first image, from above or below, of the longitudinal edge of the metal strip, and a second detector which is arranged downstream of the first detector in a forward direction of the metal strip and which comprises an optical assembly facing the longitudinal edge. The optical assembly comprises an optical camera configured to obtain a second, lateral, image of the longitudinal edge. The second image is obtained downstream of the first image.

The burr detection system further comprises a control unit configured to receive the first image and the second image, to determine a transversal position (transversal with respect to the forward direction) of said longitudinal edge with respect to a reference transversal position based on the first image, and to determine whether or not there is a burr on said longitudinal edge based on the second image.

The optical assembly of the second detector is movable in an adjustment direction to adjust its distance or position relative to the longitudinal edge. The detection assembly comprises an actuator configured to cause said displacement of the optical assembly with its actuation, and the control unit is configured to control the actuation of the actuator according to the determined transversal position of said longitudinal edge.

Adjusting the position of the optical assembly with respect to the longitudinal edge (moving the optical assembly closer or further away from the longitudinal edge) produces the same effect as the focus adjustment of the prior art liquid telecentric lens, but without the need to use this specific type of lens. In this way, the proposed system can be used with a wider range of possible cameras, which facilitates its implementation and also reduces its cost, as no special specifications are required as in the case of using cameras with liquid telecentric lenses.

Moreover, the fact of being able to dispense with this type of camera allows the use of cameras with a greater range of focus, making it possible to determine the presence or absence of burrs in a greater number of applications or systems, since it is possible to use less precise applications or systems when it comes to moving the metal strip. Additionally, it is possible to do so at higher feed speeds of the material strip, if required, since although a higher speed can generate greater lateral displacements of the metal strip during its transport, the proposed system allows obtaining good quality lateral images of the metal strip thanks to its greater degree of focus.

All this is also achieved with a cheaper and simpler system since it does not require specific and expensive cameras like those with a liquid telecentric lens, for example, and it is done in a simple way because it only requires the adjustment of a displacement in a given direction.

A second aspect of the invention relates to a burr detection method which is configured to detect burrs on at least one longitudinal edge of at least one metal strip used for the manufacture of battery electrodes. In the method, a first image, from above or below, of the longitudinal edge of the metal strip is obtained with a first detector of a detection assembly; a transversal position of the longitudinal edge is determined with respect to a reference transversal position on the basis of the first image by a control unit; a second, lateral, image of said longitudinal edge is obtained downstream in the forward direction from where the first image is obtained, with an optical camera of an optical assembly of a second detector of the detection assembly; and a determination of whether or not there is a burr on said longitudinal edge is performed on the basis of said second image, by the control unit. In the method, in addition, a distance between the optical assembly of the second detector and the longitudinal edge (or a position of the optical assembly with respect to the longitudinal edge) is adjusted based on the first image.

The advantages described for the detection system are valid for the detection method.

These and other advantages and features of the invention will become apparent in view of the figures and the detailed description of the invention.

### DESCRIPTION OF THE DRAWINGS

Figure 1 schematically shows an embodiment of the burr detection system of the invention.
Figure 2 shows a metal sheet or foil after a longitudinal cut has been made on it.
Figure 3 shows a metal sheet or foil after two longitudinal cuts have been made on it.
Figure 4a is a side and schematic view of a second detector of the detection system of Figure 1.
Figure 4b is a side and schematic view of a second detector of an embodiment of the detection system of the invention.
Figure 5 schematically shows another realisation of the burr detection system of the invention.
Figure 6 shows some elements of a second detector of an embodiment of the detection system of the invention.

### DETAILED DISCLOSURE OF THE INVENTION

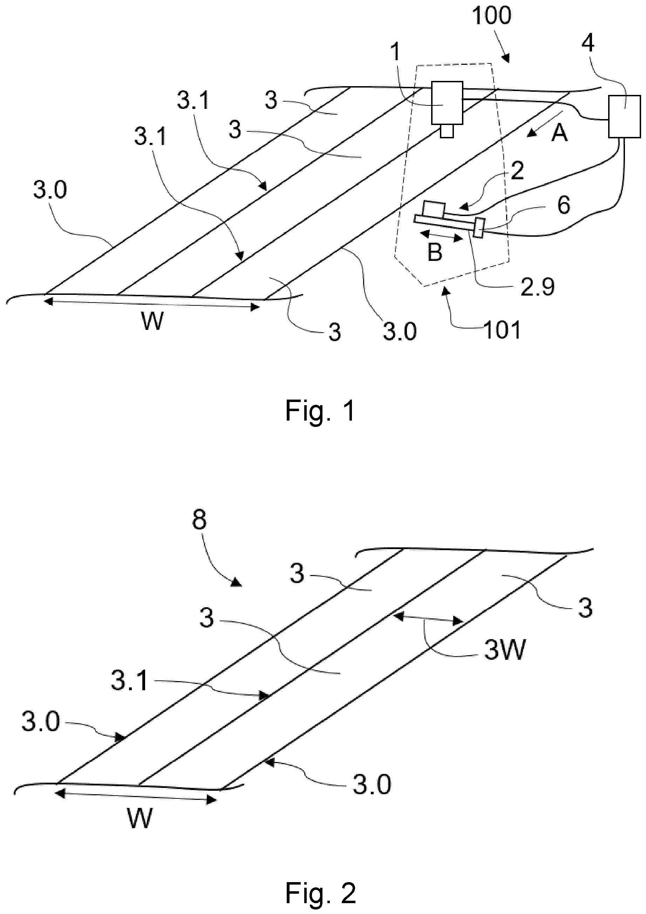

The proposed burr detection system 100, as depicted by way of example in Figure 1, is designed to detect possible burrs that may arise on at least one longitudinal edge 3.0, 3.1 of at least one metal strip 3 from which battery electrodes are generated.

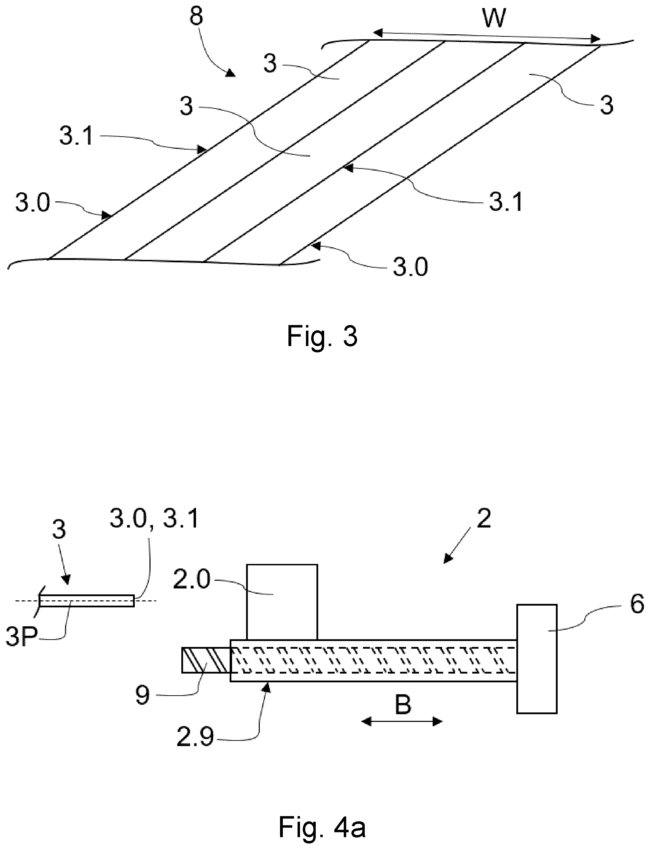

Generally, to obtain electrodes for batteries, a metal sheet or foil 8 is used as a starting point, which is usually rolled up in the form of a reel and has a certain width W. In order to adapt it to a width 3W required for the corresponding electrodes, it is common to have to cut this metal sheet 8 longitudinally as it is unrolled, thus a plurality of longitudinal metal strips 3 (see Figures 2 and 3) being obtained, each metal strip 3 comprising a determined width 3W. The sum of the widths 3W of all the metal strips 3 is equal to the width W of the metal sheet 8, and all the widths 3W are preferably equal.

Each metal strip 3 comprises two longitudinal edges 3.0, 3.1. In the case of a single longitudinal cut on the metal sheet 8, two metal strips 3 are generated, and each metal strip 3 comprises an end longitudinal edge 3.0 (edge not facing another metal strip 3) and an intermediate longitudinal edge 3.1 (edge facing another metal strip 3), as shown in Figure 2. In the case of more than one longitudinal cut is made more than two metal strips 3 are generated, and the two metal strips 3 on the sides comprise an end longitudinal edge 3.0 (not facing another metal strip 3) and an intermediate longitudinal edge 3.1, while the rest of the metal strips 3 comprise two intermediate longitudinal edges 3.1 (edges facing another metal strip 3), as depicted in Figure 3, where three metal strips 3 are shown.

As a consequence of the longitudinal cuts made on the metal sheet 8, there is a risk of burrs being generated on the longitudinal edges 3.0, 3.1 of the metal strips 3, which can subsequently lead to problems in the batteries that integrate electrodes generated from said metal strips 3, problems such as short circuits. It is therefore important to detect the presence of possible burrs on said longitudinal edges 3.0 and 3.1, in order to be able to act accordingly and to be able to avoid at least these subsequent problems. The detection system 100 comprises a detection assembly 101 configured to perform such detection.

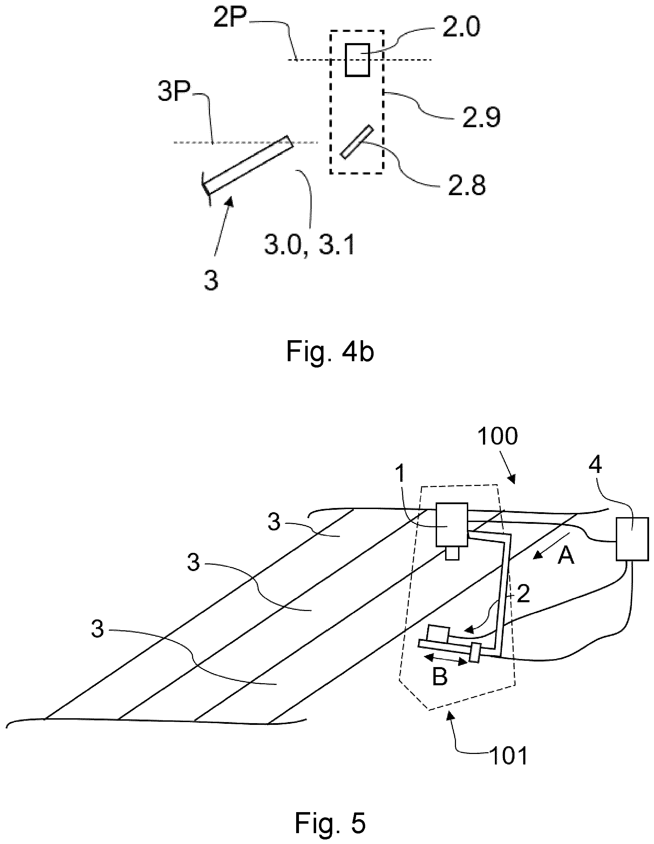

The detection assembly 101 comprises a first detector 1, preferably comprising an optical camera but could also comprise a laser, for example, for obtaining a first image, from above or below, of the longitudinal edge 3.0 of at least one metal strip 3 (preferably of an end longitudinal edge 3.0), and a second detector 2 which is arranged downstream of the first detector 1 in a forward direction A of the corresponding metal strip 3. As shown in Figures 4a and 4b, the second detector 2 comprises an optical assembly 2.9 comprising an optical camera 2.0 configured to obtain a second, lateral, image of said longitudinal edge 3.0.

The detection system 100 comprises a control unit 4 configured to receive the first image and the second image (thus being communicated with both the first detector 1 and the second detector 2), and configured to determine a transversal position of said longitudinal edge 3.0 with respect to a reference transversal position based on the first image, and to determine whether or not there is a burr on said longitudinal edge 3.0 and 3.1 based on the second image. The second detector 2 is configured to obtain a second image of a given area, and preferably the reference transversal position is the centre of the first image (of said area), thereby determining whether or not the corresponding longitudinal edge 3.0, 3.1 is in the centre of the first image.

The optical assembly 2.9 of the second detector 2 is preferably laterally facing the longitudinal edge 3.0, 3.1 and is movable in an adjustment direction B, preferably horizontally, to adjust its distance or position with respect to the corresponding longitudinal edge 3.0. The longitudinal edge 3.0, 3.1 is arranged in a given horizontal plane 3P, and the adjustment direction B extends in said plane 3P. In some embodiments, as in the embodiments shown in the figures, such displacement adjusts the lateral distance between the optical assembly 2.9 and the corresponding longitudinal edge 3.0, 3.1 by moving the optical assembly 2.9 (the optical camera 2.0) closer to or further away from the longitudinal edge 3.0, 3.1. In other embodiments described below, the camera 2.0 of the optical assembly 2.9 is arranged in a plane 2P parallel to the plane 3P of the longitudinal edge 3.0, 3.1, which lies above said plane 3P (see Figure 4b).

In any embodiment the position adjustment involves the optical assembly 2.9 moving towards or away from the corresponding longitudinal edge 3.0, 3.1, i.e. adjusting the transversal distance between the optical assembly 2.9 and the longitudinal edge 3.0, 3.1: in cases where the camera 2.0 is facing said longitudinal edge 3.0, 3.1 said camera 2.0 also moves towards or away from said longitudinal edge 3.0, 3.1., and in cases where it is a mirror 2.8 which is facing said longitudinal edge 3.0, 3.1 it is said mirror 2.8 which moves towards or away (see explanation below).

The detection assembly 101 comprises an actuator 6 configured to cause said displacement of the optical assembly 2.9 with its actuation, and the control unit 4 is configured to control the actuation of the actuator 6 as a function of the determined transversal position of the corresponding longitudinal edge 3.0, 3.1.

In the case where the reference transversal position is the centre of the first image, the control unit 4 causes a displacement equal to the difference between the detected transversal position and the reference transversal position, and causes a null displacement if the difference between the detected transversal position and the reference transversal position is null.

Both the first detector 1 and the second detector 2 are preferably configured to obtain images of the corresponding longitudinal edge 3.0 and 3.1 as the corresponding metal strip 3 advances in the forward direction A, so that it is not necessary to cause intermittent advancement of the corresponding metal strip 3.

The detection assembly 101 comprises a transversal shaft 9 extending in the adjustment direction B, and the actuator 6 is configured to act on said transversal shaft 9 when actuated. The optical assembly 2.9 is associated with said transversal shaft 9 such that said optical assembly 2.9 moves in the adjustment direction B when the actuator 6 acts on the transversal shaft 9. Preferably, the transversal shaft 9 is a spindle and the actuator 6 is a servomotor.

The detection assembly 101 may comprise a lighting device 5 focused on the part of the longitudinal edge 3.0 and 3.1 on which the optical assembly 2.9 of the second detector 2 is going to obtain the second image, the lighting device 5 comprising at least one coaxial LED. In this way, the part of the longitudinal edge 3.0 and 3.1 on which the second detector 2 is going to obtain the second image is illuminated, a better contrast of the image can be obtained and the determination of the longitudinal edge 3.0 and 3.1 being thus facilitated. This lighting device 5 is preferably integrated in the camera 2.0 of the optical assembly 2.9, which facilitates its assembly.

In some embodiments, such as that shown in Figure 5, the first detector 1 and the second detector 2 are linked, such that the first detector 1 and the second detector 2 move together in the adjustment direction B. In this way, the position of the first detector 1 is also adjusted, and as both detectors 1 and 2 are joined together, it is not necessary to incorporate additional actuators 6 to move the first detector 1, as these movements are carried out with a single actuator.

In some embodiments, the detection system 100 is configured to detect burrs on a plurality of longitudinal edges 3.0, 3.1 and comprises a detection assembly 101 for each of said longitudinal edges 3.0, 3.1. Each detection assembly 101 is communicated with the control unit 4. In this way, possible burrs on all longitudinal edges 3.0 and 3.1 of all metal strips 3 can be detected.

In other embodiments, the detection system 100 is configured to detect burrs on a plurality of longitudinal edges 3.0, 3.1 and comprises a second detector 2 for each of said longitudinal edges 3.0, 3.1. The first detector 1 of said detection assembly 101 is configured to detect the first image of one of said longitudinal edges 3.0, 3.1, and each second detector 2 is communicated with the control unit 4. In this way, possible burrs on all longitudinal edges 3.0 and 3.1 of all metal strips 3 can be detected.

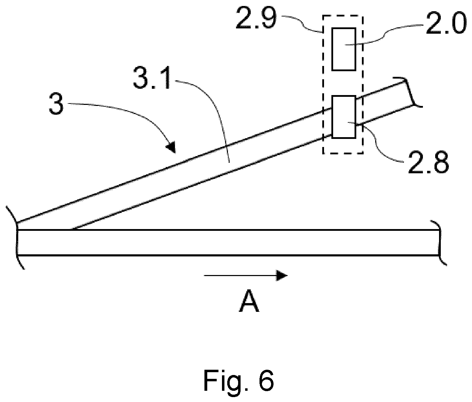

The intermediate longitudinal edges 3.1 are not always easily accessible for obtaining at least the corresponding second image with the corresponding detection assembly 101 or the corresponding second detector 2. In order to detect the burrs of an intermediate longitudinal edge 3.1, the corresponding optical assembly 2.9 may further comprise an inclined mirror 2.8 (see Figures 4b and 6), inclined preferably 45° with respect to the forward direction A. The mirror 2.8 is arranged facing the corresponding intermediate longitudinal edge 3.1 to reflect the image of said intermediate longitudinal edge 3.1 (preferably facing laterally), and the camera 2.0 is facing said mirror 2.8 to obtain the second image through the mirror 2.8 (preferably facing from above). This allows the second image of the side of these intermediate longitudinal edges 3.1 to be obtained from above rather than laterally, where it is easier to arrange the cameras 2.0 due to the space available for this purpose.

In these cases, although all the metal strips 3 start from the same point, during their travel they are caused to extend in longitudinal directions with an inclination between them (see Figure 6). This allows the mirrors 2.8 to be arranged where required. The detection system 100 comprises means (not shown in the figures) for causing said metal strips 3 to extend in that way.

A second aspect of the invention relates to a burr detection method which is configured to detect burrs on at least one longitudinal edge 3.0, 3.1 of at least one metal strip 3 used for the manufacture of battery electrodes. The proposed detection method is adapted to be implemented in a detection system 100 as previously described in any of its embodiments and/or configurations, said method thus comprising the embodiment and/or configuration required for the embodiment and/or configuration of said detection system 100.

Broadly speaking, in the method, the first image of the longitudinal edge 3.0, 3.1 of the metal strip 3 is obtained with the first detector 1 of the detection assembly 101; the transversal position of said longitudinal edge 3.0, 3.1 with respect to the reference transversal position is determined based on the first image; the second image of said longitudinal edge 3.0, 3.1 is obtained, at least with the optical camera 2.0 of the optical assembly 2.9; and it is determined whether or not there is a burr on said longitudinal edge 3.0, 3.1 on the basis of said second image. In the method, further, the distance between the optical assembly 2.9 of the second detector 2 and the longitudinal edge 3.0, 3.1 is adjusted based on the first image, as previously explained for the detection system 100.

As the method is adapted to be implemented in the detection system 100 described above, what has been explained for the detection system 100 is also valid for the detection method and is not repeated here.

## Claims

1. Burr detection system which is configured to detect burrs on at least one longitudinal edge (3.0; 3.1) of at least one metal strip (3) which is used for the manufacture of battery electrodes, the detection system (100) comprising a detection assembly (101) for performing such detection and comprising the detection assembly (101) a first detector (1) for obtaining a first image, from above or below, of the longitudinal edge (3.0; 3.1) of the metal strip (3), and a second detector (2) which is arranged downstream of the first detector (1) in a forward direction (A) of the metal strip (3) and comprising an optical assembly (2.9) facing the longitudinal edge (3.0; 3.1) and having an optical camera (2.0) configured to obtain a second, lateral, image of said longitudinal edge (3.0; 3.1), the detection assembly (100) comprising a control unit (4) configured to receive the first image and the second image and to determine a transversal position of said longitudinal edge (3.0; 3.1) with respect to a reference transversal position based on the first image and to determine whether or not there is a burr on said longitudinal edge (3.0; 3.1) based on the second image, **characterised in that** the optical assembly (2.9) of the second detector (2) is movable in an adjustment direction (B) to adjust its position with respect to the longitudinal edge (3.0; 3.1), the detection assembly (101) comprising an actuator (6) configured to cause said displacement of the optical assembly (2.9) by its actuation, the control unit (4) being configured to control the actuation of the actuator (6) according to the determined transversal position of said longitudinal edge (3.0; 3.1).

2. Burr detection assembly according to claim 1, wherein the detection assembly (101) comprises a transversal shaft (9) extending in the adjustment direction (B) and the actuator (6) is configured to act on said transversal shaft (9) when actuated, the optical assembly (2.9) of the second detector (2) being associated with said transversal shaft (9) such that it moves in the adjustment direction (B) when the actuator (6) acts on the transversal shaft (9).

3. Burr detection system according to claim 1 or 2, wherein the detection assembly (101) comprises a lighting device (5) focused on the part of the longitudinal edge (3.0) facing the optical assembly (2.9) of the second detector (2) in the adjustment direction (B), said lighting device (5) comprising at least one coaxial LED and said lighting device (5) being configured to illuminate said part of the longitudinal edge (3.0) and being preferably integrated in the camera (2.0) of said optical assembly (2.9).

4. Burr detection system according to any of claims 1 to 3, wherein the first detector (1) and the second detector (2) are configured to obtain images of the longitudinal edge (3.0; 3.1) of the metal strip (3) as said metal strip (3) moves in the forward direction (A).

5. Burr detection system according to any of claims 1 to 4, wherein the reference transversal position is the centre of the first image.

6. Burr detection system according to any of claims 1 to 5, wherein the first detector (1) comprises an optical camera.

7. Burr detection system according to any of claims 1 to 6, wherein the first detector (1) and the second detector (2) are linked such that the first detector (1) and the second detector (2) move together in the adjustment direction (B).

8. Burr detection system according to any of claims 1 to 7, wherein when the longitudinal edge (3.1) of the metal strip (3) is facing another longitudinal edge (3.1) of another metal strip (3), the optical assembly (2.9) comprises an inclined mirror (2.8) which is arranged downstream of the first detector (1) in the forward direction (A) and laterally facing said longitudinal edge (3.1), the camera (2.0) of said optical assembly (2.9) being facing the mirror (2.8) from above and being configured to obtain a second, lateral, image of said longitudinal edge (3.1) through said mirror (2.8).

9. Burr detection system according to claim 8, wherein the mirror (2.8) comprises an inclination of 45°, the camera (2.0) of the optical assembly (2.9) pointing towards the mirror (2.8).

10. Burr detection system according to any of claims 1 to 9, which is configured to detect burrs on a plurality of longitudinal edges (3.0, 3.1) and which comprises a detection assembly (101) for each of said longitudinal edges (3.0, 3.1), each detection assembly (101) being in communication with the control unit (4).

11. Burr detection system according to any of claims 1 to 9, which is configured to detect burrs on a plurality of longitudinal edges (3.0, 3.1), the detection assembly (101) comprising a second detector (2) for each one of said longitudinal edges (3.0, 3.1) that is communicated with the control unit (4), and the first detector (1) of said detection assembly (101) being configured to detect the first image of one of said longitudinal edges (3.0, 3.1).

12. Burr detection method which is configured to detect burrs on at least one longitudinal edge (3.0; 3.1) of at least one metal strip (3) used for the manufacture of battery electrodes, wherein a first image of the longitudinal edge (3.0; 3.1) of the metal strip (3.0; 3.1) is obtained from above or below, with a first detector (1) of a detection assembly (101); a transversal position of said longitudinal edge (3.0; 3.1) of said metal strip (3.0; 3.1) is determined with respect to a reference transversal position on the basis of the first image by a control unit (4); a second, lateral, image of said longitudinal edge (3.0; 3.1) is obtained downstream in the forward direction (A) from which the first image is obtained, with an optical camera (2.0) of an optical assembly (2.9) of a second detector (2) of the detection assembly (100); and whether or not there is a burr on said longitudinal edge (3.0; 3.1) is determined based on said second image, by means of the control unit (4), **characterised in that** in the method a distance between the optical assembly (2.9) of the second detector (2) and the longitudinal edge (3) is adjusted as a function of the first image.

13. Burr detection method according to claim 12, wherein the reference transversal position is the centre of the first image, the control unit (4) causing a displacement equal to the difference between the detected transversal position and the reference transversal position and said control unit (4) causes a null displacement if the difference between the detected transversal position and the reference transversal position is null.

14. Burr detection method according to claim 12 or 13, wherein, in order to obtain the second image of the longitudinal edge (3.0; 3.1), at least the part of the longitudinal edge (3.0; 3.1) whose image is going to be obtained is illuminated with a coaxial light.

15. Burr detection method according to any of claims 12 to 14, which is configured to detect burrs on a plurality of longitudinal edges (3.0; 3.1).
